# FASCICULE DE BREVET EUROPEEN

(11) **EP 1 585 070 B1**
(45) Date de publication et mention de la délivrance du brevet: **18.08.2010**
(21) Numéro de dépôt: 04292337.5
(22) Date de dépôt: 01.10.2004
(51) Int. Cl.: G07F 7/10, G06K 17/00, G06K 19/07

(54) **Machine de personnalisation à haute cadence**
Hochgeschwindigkeitsmaschine zur Personalisierung
High speed machine for personalisation

(30) Priorité: 06.04.2004 FR 0403623
(43) Date de publication de la demande: 12.10.2005
(73) Titulaire: DATACARD CORPORATION, Minnetonka, MN 55343-9015 (US)
(72) Inventeur: Berthe, Benoît, 45380 La Chapelle Saint Mesmin (FR)
(74) Mandataire: Cabinet Plasseraud

(56) Documents cités:
- EP-A- 0 706 150
- EP-A- 0 984 389
- EP-A- 1 076 314
- WO-A-02/21436
- US-A1- 2001 045 455
- US-B1- 6 246 326
- US-B1- 6 588 673

## Description

La présente invention concerne une machine de personnalisation à haute cadence, plus particulièrement une machine de personnalisation de documents, tel que des passeports, contenant une puce électronique.

Il est connu des machines de personnalisation pour objet portatif telles que des cartes à puce et en particulier les cartes à puce dites "intelligentes" c'est-à-dire incorporant un microprocesseur ou un microcalculateur. Ces machines permettent d'inscrire dans la mémoire du microprocesseur d'une carte des informations provenant d'un système informatique, la carte à puce, avant personnalisation, étant vierge et sans marquage et n'étant pas présélectionnée. Après personnalisation, la machine effectue une opération de suivie de la carte personnalisée pour imprimer ou graver le plastique de la carte avec les informations du détecteur. Ces cartes à puce communiquent avec le monde extérieur par l'intermédiaire de borniers à contact ou sans contact selon les applications ce qui nécessite une plus ou moins grande sécurité. Toutefois ces machines de personnalisation haute cadence ne permettent pas la personnalisation de puces électroniques incorporées dans un document d'identité tel qu'un passeport, dont les informations de personnalisations sont directement liées aux informations masquées ou imprimées déjà contenues dans le document. Dans ce cas, la machine de personnalisation doit effectuer une opération d'identification de l'objet incorporant la puce électronique avant personnalisation, afin d'éviter une erreur d'écriture de données de personnalisation dans une puce électronique ne correspondant pas au contenu du document dans lequel la puce est insérée.

Il est connu également, notamment par la demande de brevet US2001/045455, des machines de personnalisation de documents a plusieurs feuillets, tels que des passeports par exemple, comportant au moins un mécanisme de feuilletage comprenant un mécanisme de lecture d'une information sur le passeport et au moins un mécanisme de personnalisation par inscription d'informations sur le passeport.

Cette machine peut également comporter éventuellement un module de programmation de puce électronique, en amont des mécanismes de feuilletage et de personnalisation par inscription d'informations sur le passeport, par exemple pour vérifier si la puce fonctionne.

La présente invention a pour but de pallier certains inconvénients de l'art antérieur en proposant une machine de personnalisation haute cadence de puces électroniques intégrées dans un document portant des informations préalablement marquées sur le document, tel qu'un passeport.

Ce premier but est atteint par une machine de personnalisation à haute cadence comportant, un dispositif de personnalisation de documents personnalisables et un système informatique, la machine étant caractérisée en ce que le document personnalisable comprend une information visible ou non correspondant à une identification, une puce électronique et un moyen de communication sans contact de type antenne émettrice/réceptrice reliée à la puce électronique, la puce électronique et le moyen de communication étant incorporés dans le document et la machine de personnalisation comprenant un dispositif de lecture de l'identifiant du document, cet identifiant étant associé à des données mémorisées dans une base de données du système informatique, dont au moins certaines seront inscrites par la machine de personnalisation dans la puce électronique du document.

Selon une particularité, la puce électronique comprend un circuit intégré comportant au moins une mémoire.

Selon une particularité, l'identifiant du document est une information imprimée de type code à barre ou perforée ou magnétique ou une suite de caractères OCR ou OCV.

Selon une particularité, l'identifiant du document est une donnée pré-mémorisée dans la puce électronique du document, telle que le numéro de série de la puce électronique.

Selon une particularité, le document est un document, de type passeport, comprenant plusieurs feuillets l'ensemble puce électronique et moyen de communication étant incorporé soit dans la couverture du document, soit entre des feuillets du document.

Selon une particularité, le document est un document, de type passeport, comprenant plusieurs feuillets, l'identifiant étant marqué sur une des faces extérieures ou intérieures de la couverture du document ou sur un des feuillets du document

Selon une particularité, le poste de personnalisation comprend une pluralité de dispositifs de personnalisation dans lesquelles sont chargés les documents de personnalisation, et une ou plusieurs cartes électroniques reliées à un ou plusieurs dispositifs de personnalisation, le dispositif de personnalisation comprenant un plateau fixe sur lequel est maintenu le document et un moyen de communication sans contact telle qu'une antenne émettrice/réceptrice pour communiquer avec le moyen de communication sans contact du document, l'antenne étant associée à une carte électronique permettant la personnalisation de chaque document, la carte électronique étant en communication avec le système informatique gérant les données de personnalisation.

Selon une particularité, dans la machine de personnalisation à haute cadence le maintien du document dans le dispositif de personnalisation est assuré par pincement du document entre le plateau fixe et une tête.

Selon une particularité, le moyen de communication sans contact du dispositif de personnalisation est disposé dans la tête.

Selon une particularité, le moyen de communication sans contact du dispositif de personnalisation est disposé dans le plateau fixe.

Selon une particularité, chaque carte électronique comporte un circuit d'interface avec un ou des moyens de communication sans contact, reliée par un bus à un microprocesseur qui exécute un programme de personnalisation.

Selon une particularité, le système informatique est relié au dispositif de lecture de l'identifiant du document qui comporte des moyens de transmission de l'identifiant vers le système informatique couplé avec une base de données, le système informatique comprenant des moyens d'extraire de la base de données et de communiquer des données de personnalisation à la carte électronique du dispositif de personnalisation dans lequel le document sera inséré et d'envoyer ces données à la carte électronique, la carte électronique comprenant un moyen de transmettre les données de personnalisation reçues dans la mémoire de la puce électronique.

Selon une particularité, le bus de chaque carte électronique est relié en réseau par une interface relié par un connecteur au système informatique, le système informatique comprenant un moyen de suivi de la position des cartes électroniques reliées aux dispositifs de personnalisation et d'adresser les cartes électroniques correspondant au dispositif de personnalisation qui arrivera en position de chargement ou qui vient de quitter la position de chargement.

Selon une particularité, le dispositif de lecture est un dispositif de lecture à reconnaissance optique de caractère permettant de lire un identifiant imprimé visible du document, le système informatique utilisant cet identifiant pour rechercher les données de personnalisation dans sa base de données.

Selon une particularité, le dispositif de lecture comprend un élément tournant les feuillets du document et maintenant ces feuillets ouverts à la page où l'identifiant est inscrit.

Selon une particularité, le dispositif de lecture est un dispositif de lecture magnétique ou électromagnétique permettant de lire l'identifiant magnétique du document, le système informatique utilisant cet identifiant pour rechercher les données de personnalisation dans sa base de données.

Selon une particularité, le dispositif de lecture est un dispositif de lecture de circuit imprimé comprenant un moyen de communication sans contact permettant de lire un identifiant pré-mémorisé dans la mémoire de la puce électronique du document, le système informatique utilisant ce numéro pour rechercher les données de personnalisation dans sa base de données.

Selon une particularité, le dispositif de lecture de la machine de personnalisation est distinct du poste de personnalisation et est disposé avant le poste de personnalisation.

Selon une particularité, chaque carte électronique comprend un connecteur relié à un moyen de communication sans contact des dispositifs de personnalisation, le dispositif de lecture de l'identifiant pré-mémorisé dans mémoire de la puce électronique d'un document étant réalisé par le moyen de communication sans contact associé au microprocesseur de la carte électronique comportant le document personnalisable.

Selon une particularité, un dispositif de lecture optique ou magnétique est disposé dans la tête de chaque dispositif de personnalisation de manière à être situé en vis-à-vis d'un identifiant visible d'un document chargé dans un dispositif de personnalisation.

Selon une particularité, la machine de personnalisation comporte des moyens de commande du séquencement et de la gestion de la personnalisation.

Selon une particularité, la machine de personnalisation à haute cadence comprend un dispositif de transfert de document personnalisable comportant une ligne de transfert sur laquelle sont montés des moyens de préhension de documents, les moyens de préhension étant montés à intervalle régulier, par paire, dont la distance maximale entre deux moyens de préhension consécutifs permettant de maintenir d'un document.

Selon une particularité, le poste de personnalisation comprend un plateau tournant comportant une pluralité de dispositif de personnalisation présenté en position de chargement, transversalement et séquentiellement à la ligne de transfert du dispositif de transfert, le plateau tournant comprenant un dispositif de chargement/déchargement permettant de décharger un document personnalisé d'un dispositif de personnalisation situé sur le dispositif de chargement/déchargement vers le dispositif de transfert de documents et de charger un nouveau document du dispositif de transfert vers le dispositif de personnalisation, le temps de personnalisation maximal correspondant à un tour de rotation du plateau tournant.

Selon une particularité, le poste de personnalisation comprend un ascenseur comportant une pluralité de dispositifs de personnalisation disposés linéairement et de manière juxtaposée dans l'ascenseur, l'ascenseur comprenant un dispositif de chargement/déchargement permettant de décharger un document personnalisé d'un dispositif de personnalisation situé sur le dispositif de chargement/déchargement vers le dispositif de transfert de documents et de charger un nouveau document du dispositif de transfert vers le dispositif de personnalisation, le temps de personnalisation maximal correspondant à un cycle de translation complète de l'ascenseur.

Selon une particularité, l'axe de l'ascenseur est disposé perpendiculairement et face à la ligne de transfert du chemin de transfert, le déplacement de l'ascenseur étant effectué par une translation verticale.

Selon une particularité, l'axe de l'ascenseur est disposé parallèlement et en vis à vis de la ligne de transfert du chemin de transfert, le déplacement de l'ascenseur étant effectué par une translation horizontale.

Selon une particularité, la machine de personnalisation à haute cadence comporte un dispositif dépileur de document en entrée de la machine, un dispositif empileur en sortie de la machine.

Selon une particularité, la machine de personnalisation à haute cadence est incorporable dans une machine de fabrication et/ou de pré-personnalisation de passeports, le système informatique de la machine de personnalisation gérant également la fabrication et/ou la pré-personnalisation des passeports.

Un autre but de l'invention consiste en un procédé de personnalisation réalisé par une machine de personnalisation comportant un dispositif de personnalisation d'un document personnalisable et un système informatique comprenant une base de données, le document personnalisable comportant un identifiant, une puce électronique et un moyen de communication sans contact, le procédé de personnalisation étant caractérisé en ce qu'il comprend les étapes suivantes:
- une première étape de lecture de l'identifiant du document par un dispositif de lecture et de transmission de l'information lue au système informatique,
- une deuxième étape de recherche de données de personnalisation dans une base de données du système informatique en fonction de l'identifiant du document,
- une troisième étape de transmission et d'inscription des données dans une mémoire de la puce électronique du document, avec inscription éventuelle de l'identifiant dans la mémoire de la puce.

Selon une particularité, la troisième étape est réalisée par une étape de chargement des données de personnalisation relatives à l'identifiant du document dans une mémoire de la carte électronique associé au dispositif maintenant le document et une étape de communication de ces données de personnalisation dans à la puce électronique du document par les moyens de communication sans contact pour l'inscription de ces données dans la mémoire de la puce électronique.

D'autres particularités et avantages de la présente invention apparaîtront plus clairement à la lecture de la description ci-après, faite en référence aux dessins annexés, dans lesquels :
- la figure 1 représente une vue en élévation de face de la machine de personnalisation selon un premier mode de réalisation de la présente invention;
- la figure 2A représente une vue en élévation de face d'une partie de la machine de personnalisation et du poste de personnalisation selon un premier mode de réalisation de la présente invention;
- la figure 2B représente une vue en élévation de face d'une partie de la machine de personnalisation et du poste de personnalisation selon un deuxième mode de réalisation de la présente invention;
- la figure 3 représente une vue en perspective du poste d'introduction des objets portables dans le plateau de personnalisation selon un mode de réalisation de la présente invention;
- les figures 4A et 4B représentent le schéma de la carte circuit électronique des dispositifs de personnalisation nécessaires à la personnalisation sans contact d'un document respectivement selon deux modes de réalisation;
- la figure 4C représente le schéma de la carte circuit électronique des dispositifs de personnalisation nécessaires à la personnalisation sans contact d'un document respectivement selon un troisième mode de réalisation;
- la figure 5 représente une vue de profil du plateau de personnalisation associé à un système à levier selon un mode de réalisation de la présente invention;
- les figures 6A et 6B représentent une vue de dessus et d'intérieur d'un document selon deux modes de réalisation de la présente invention.
- les figures 7A et 7B représentent un schéma logique du procédé de personnalisation selon les deux modes de réalisation des figures 4A ou 4B et 4C.

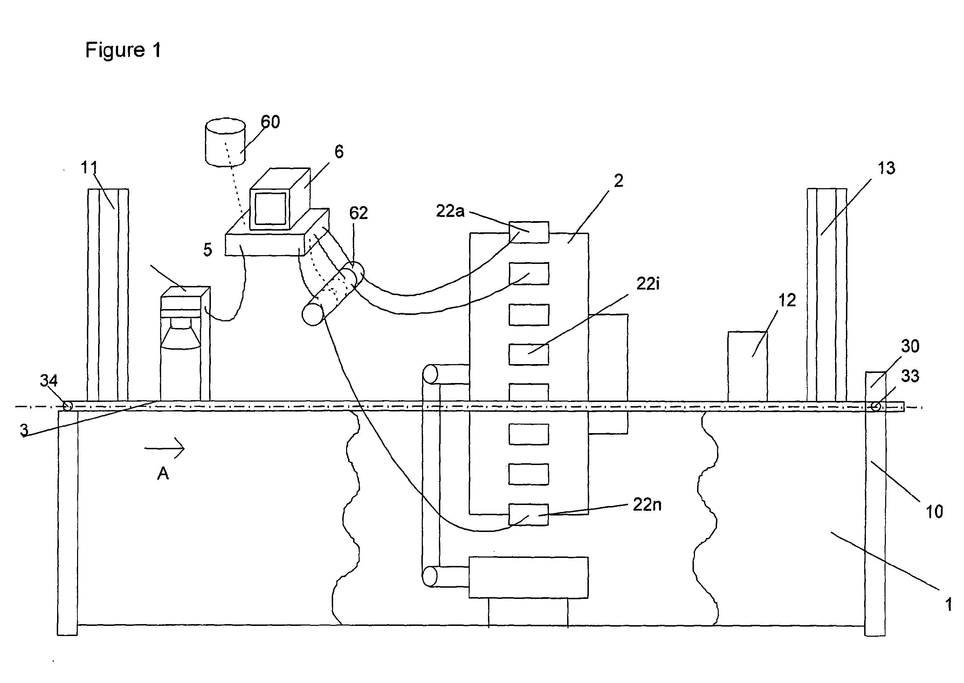

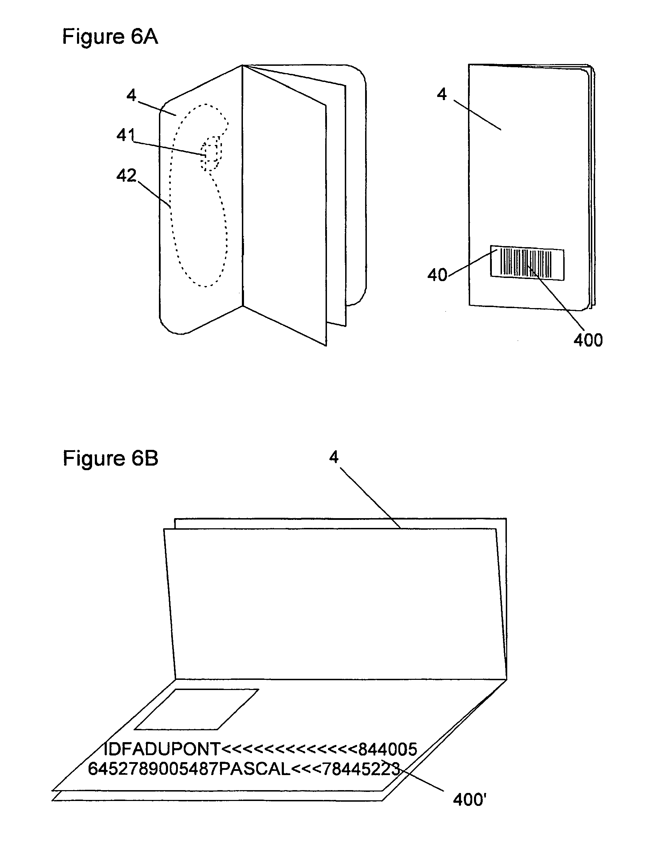

L'invention qui va être décrite en liaison avec les figures 1 à 7 permet de personnaliser des objets portables (4), tels que des documents ci-après appelés passeports, chacun comprenant une puce électronique (41), un moyen de communication sans contact (42), telle qu'une antenne d'émission et de réception, associé à la puce électronique et une information visible ou non, par exemple une étiquette (40) correspondant à une identification. L'étiquette à identifier peut être disposée sur les faces extérieures (figure 6A) ou les faces intérieures de la couverture du document (4) ou peut également être disposée sur un des feuillets du document (figure 6B). L'identifiant de l'étiquette (40) peut être un code à barre, une perforation, une redondance, un code formé de caractères de type OCR ou OCV imprimés sur ou dans le document ou un élément magnétique, représentant un numéro d'identification relatif au passeport (4). L'ensemble puce électronique (41) et moyen de communication (42) est inséré soit dans la couverture du passeport (4) ou entre plusieurs feuillets du passeport. La puce électronique comprend une mémoire pouvant, soit être totalement vierge, soit avoir déjà été pré-personnalisée en amont sur une machine précédente et contenir déjà des données de pré-personnalisation telles par exemple qu'un numéro de série. Ces données de pré-personnalisations peuvent être considérées comme l'information d'identification du passeport, l'étiquette n'étant pas présente sur le document dans ce cas. Après personnalisation de la puce sur la machine de personnalisation de la présente invention, la mémoire de la puce contient des données de personnalisations relatives aux informations indiquées dans le passeport. Par exemple, ces informations peuvent être la date de validité et l'endroit de délivrance du passeport, des informations relatives à l'utilisateur du passeport, telles que la date et l'endroit de naissances de l'utilisateur, ses données biométriques. Il est évident que la présente invention permet de personnaliser tout autre document (4) comportant un identifiant (40) et une puce électronique (41) tels que décrits auparavant. La personnalisation se fait avec des passeports (4) comportant des puces électroniques (41) dites "à circuit intégré" (41) dont le circuit intégré est relié au monde extérieur par une antenne d'émission réception. Dans ce cas, la puce est dite "sans contact" et communique par ondes hertziennes avec une autre antenne reliée à la machine de personnalisation. Ainsi, la machine de personnalisation, par l'utilisation de l'antenne, peut personnaliser des puces électroniques (41) des passeports (4) sans contact.

En se référant à la figure 1 l'invention comprend principalement un dispositif de lecture de l'identifiant du passeport (5) et un dispositif de personnalisation (2) de la puce insérée dans ce même passeport, le dispositif de lecture (5) et le dispositif de personnalisation (2) étant tous les deux reliés à un système informatique comportant une base de données dans laquelle sont stockées les données de personnalisations. L'information lue par le dispositif de lecture (5) permet au système informatique de récupérer les données de personnalisation relatives à l'information, dans la base de données et de les transmettre au dispositif de personnalisation qui communiquera ces données de personnalisation dans la mémoire de la puce électronique insérée dans le passeport. Plusieurs modes de réalisations sont présentés ci-après décrivant une machine de personnalisation comprenant au moins les caractéristiques techniques venant d'être énoncées

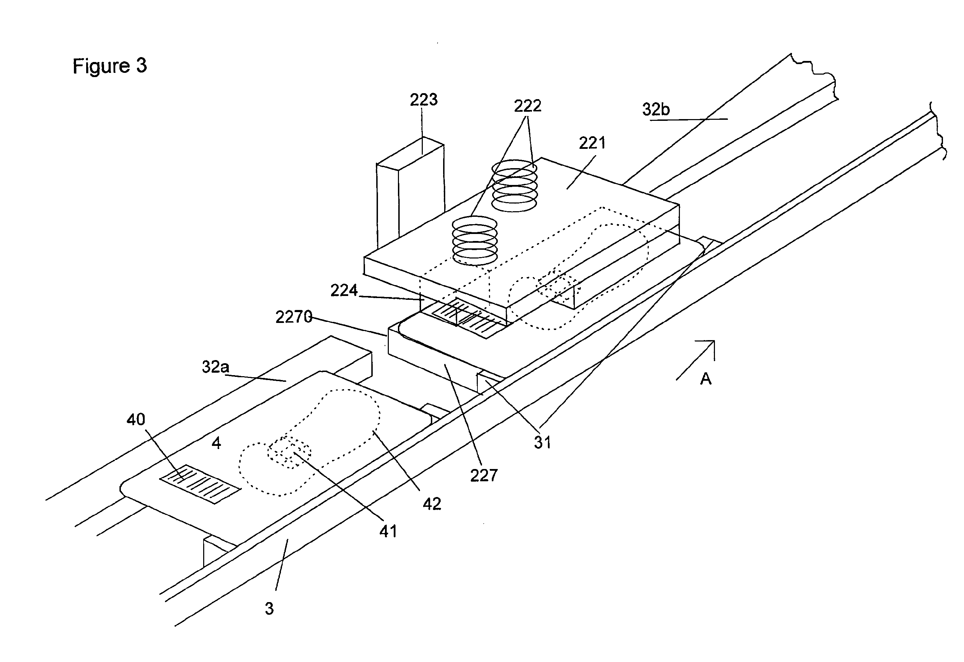

Selon un premier mode de réalisation, l'invention est constituée d'une table (1) montée sur des pieds (10) sur le plateau de laquelle est disposé un moyen de transport tel qu'un chemin de transfert formé par une courroie crantée (3) continue circulant entre deux poulies (33, 34) d'extrémité dont l'une est entraînée par un moteur (30). Sur cette courroie sans fin (3) sont montés à intervalle régulier, par paires, des moyens de préhension (31), tels que des taquets ou des pinces de préhension permettant de maintenir en position horizontale le passeport lors de son acheminement. La distance entre deux des moyens de préhension (31) consécutifs correspond à la longueur d'un passeport (4). Chaque paire de moyen de préhension (31) distants d'une longueur d'un passeport est adjacente de la paire suivante d'une longueur plus courte. Les moyens de préhension (31) permettent le maintien des passeports (4) pendant le déplacement sur la partie aller du chemin représenté par la flèche (A) sur la figure 3, et l'entraînement des passeports d'un poste vers un autre. Pour plus de détail concernant les moyens de préhension (31) selon un mode de réalisation de type taquets et le dispositif de transfert, on peut se référer à la demande de brevet européen 0 589 771 du même déposant. Les pinces de préhension (31), selon le second mode de réalisation des moyens de préhension (31), comprennent un système d'ouverture et de fermeture commandé mécaniquement ou informatiquement permettant de maintenir les feuillets d'un passeport (4) lors du cheminement du document (4) à travers le chemin de transfert. Ces pinces de préhension permettent d'éviter que les feuillets ne soient involontairement pliés. La commande de l'ouverture et de la fermeture des pinces de préhension peut être réalisée lors de la distribution des documents (4) sur le chemin de transfert, lors du chargement et du déchargement des documents (4) sur le poste de personnalisation et/ou lors de l'évacuation ou du stockage des documents à la fin de la personnalisation. Selon une variante de réalisation du maintien des passeports, les passeports peuvent être acheminés en position verticale par les moyens de préhensions du chemin de transfert. Dans ce cas, la distance entre deux moyens de préhensions consécutifs correspond soit à la longueur des documents, soit à la largeur des documents suivant la position verticale utilisée. Le chemin de transfert est complété comme on peut le voir sur la figure 3 par des rails d'appui (32a, 32b) qui sont interrompus au poste de chargement/déchargement pour permettre le passage des dispositifs de personnalisation (22i) solidaires d'un poste de personnalisation (20) comme on le verra ultérieurement.

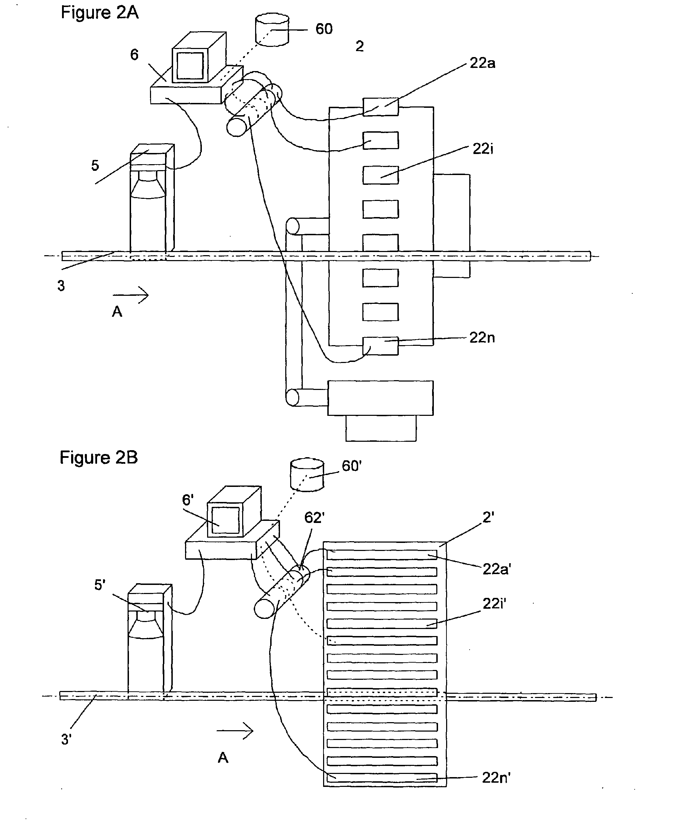

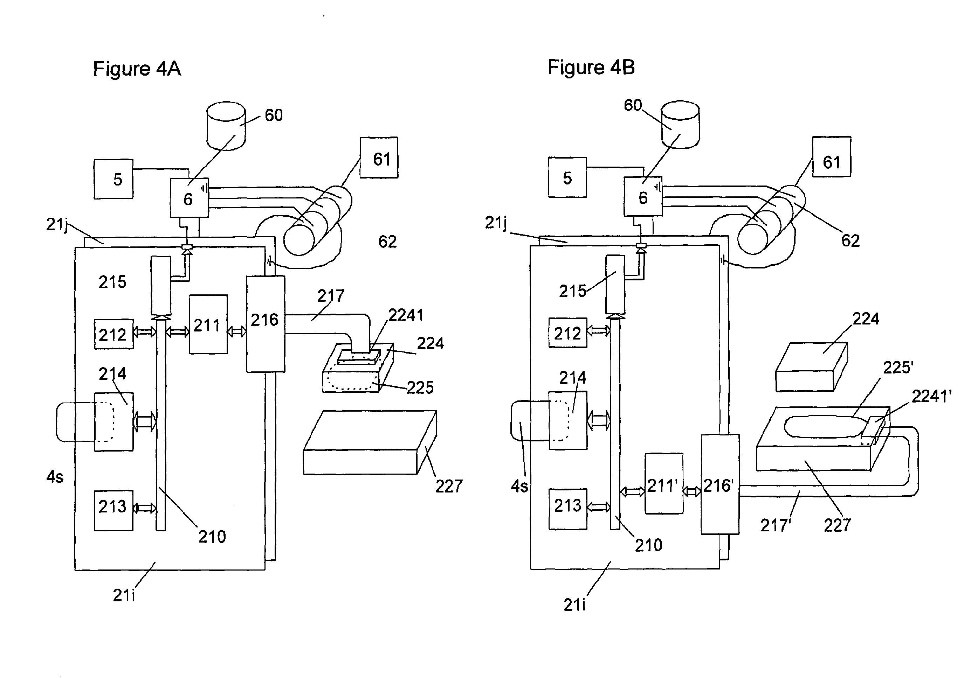

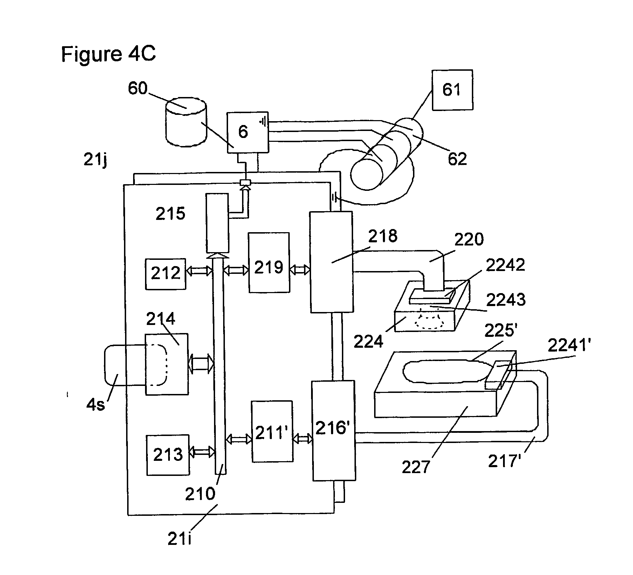

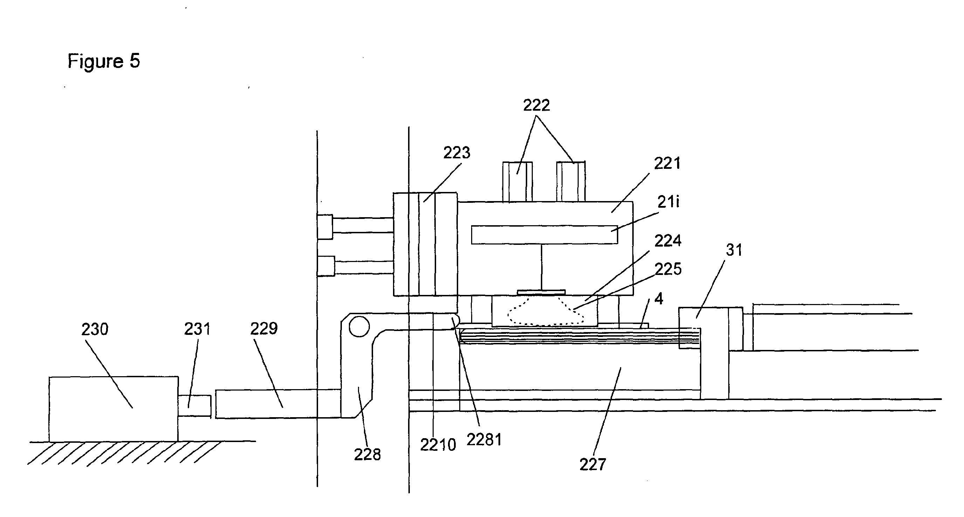

En se référant aux figures 1 et 2A, la table comporte un dispositif dépileur (11) qui à partir d'un lot de passeports distribue les passeports (4) et les insère un par un entre chaque paire de moyens de préhension (31). Dans le mode de transfert des passeports en position horizontale sur le chemin de transfert (représente figure 1), le dispositif dépileur comprend un magasin vertical dans lequel sont empilés les passeports. Dans le mode de transfert des passeports en position verticale sur le chemin de transfert (non représenté), le dispositif dépileur comprend un magasin horizontal dans lequel sont accolés les passeports. D'autre part, le dispositif dépileur (11) peut comporter un double magasin d'entrée permettant l'approvisionnement sans arrêt de la machine, l'échange des magasins s'effectuant en temps masqué. Chaque magasin est amovible avec une contenance par exemple de 500 passeports. Les passeports (4) ainsi introduits dans le chemin de transfert sont amenés face au dispositif de lecture de l'identifiant du passeport, appelé dans la suite de la description poste de lecture (5). Ce poste de lecture (5) permet de lire et de décoder l'identifiant inscrit sur l'étiquette (40) des passeports (4). Dans un mode de réalisation où l'étiquette du passeport est magnétique, le poste de lecture est à lecture magnétique. Dans un mode de réalisation où l'étiquette comporte un code à barres ou des perforations ou un code à caractères OCR ou OCV, le poste de lecture comprend une caméra optique pour déchiffrer les inscriptions de l'étiquette. Dans un mode de réalisation où les inscriptions de type caractères OCR ou OCV sont inscrites sur un des feuillets du document, le poste de lecture comprend un dispositif permettant de tourner automatiquement les pages des passeports et de les maintenir ouvert au feuillet désiré lors de la lecture. De manière générale, le poste de lecture est relié à un système (6) informatique comprenant une base de données (60). Le système informatique (6) va effectuer le lien entre la lecture de l'identifiant, la recherche des données de personnalisation correspondant à cet identifiant dans la base de données et l'inscription des données dans la mémoire de la puce électronique associée à l'identifiant. Pour cela le système informatique (6) réalise un procédé de personnalisation expliqué dans la suite de la description. Après lecture de l'identifiant (40) des passeports (4), les passeports (4) sont transférés du poste de lecture (5) vers le poste de personnalisation (2). Le transfert entre les deux postes peut être effectué de manière sécuritaire afin de ne pas substituer le passeport (4) avant la personnalisation des puces électroniques (41). Un minimum de pas de transfert sur le chemin de transfert (3) est préférable pour minimiser le temps écoulé entre la lecture de l'identifiant (40) et l'écriture des informations dans la puce électronique (41) d'un passeport (4). Pour sécuriser le système, le mode de réalisation du moyen de préhension (31) avec pinces de préhension est préféré, afin d'empêcher une quelconque fraude, les passeports (4) étant maintenus par les pinces lors du transfert du poste de lecture (5) au poste de personnalisation (2). Le poste de personnalisation (2), selon un mode de réalisation représenté en figure 2A, comporte un plateau tournant ou tambour (20) dont l'axe de rotation est horizontale et perpendiculaire au plateau de la table (1). Le plateau tournant est situé en retrait par rapport au chemin de transfert de façon à ce que le plateau (20) se présente au chemin de transfert orienté selon la flèche (A). Ce plateau tournant (20) supporte sur son pourtour une pluralité de dispositifs de personnalisation (22i, 22n) de façon que chaque dispositif de personnalisation (22i, 22n) puissent venir s'intercaler dans le cheminement des passeports entre le rail de guidage (32a) de l'arrivée des passeports et le rail (32b) de guidage en sortie du système de personnalisation formé par le plateau tournant (20). Selon un mode de transfert des passeports en position horizontale (représenté en figure 3), les dispositifs de personnalisation se présentent parallèlement au chemin de transfert. Selon un mode de transfert des passeports en position verticale (non représenté), les dispositifs de personnalisation se présentent perpendiculairement au chemin de transfert. Dans tous les cas, les dispositifs de personnalisation (22i) sont de dimension légèrement inférieure aux passeports (4) et ménagent entre leur bord extérieur et la courroie crantée (3) un espace. Un dispositif, par exemple à vérin, permet de positionner correctement chaque passeport, une fois que celui-ci a été amené entre les deux éléments du dispositif de personnalisation (22i) en appui sur les surfaces de référence (2270) de la partie fixe (227) du dispositif de personnalisation. Chaque dispositif de personnalisation (22i) à un passeport (4) comporte un plateau fixe (227) solidaire du plateau tournant (20), et une colonne de guidage (223) solidaire du plateau (20) pour guider un élément mobile (221) supportant une tête (224). Comme représenté en figure 4A, chaque tête (224) est en matériau non-conducteur, tel qu'une matière plastique et comporte un moyen de communication sans contact telle qu'une antenne d'émission et de réception (225), reliée électriquement à un connecteur (2241) qui assure la connexion avec une nappe de fils (217) reliée par un autre connecteur (216) à une carte électronique (21 i) de personnalisation et de gestion de la tête (224). Chaque dispositif de personnalisation (22i) est relié à une carte de personnalisation (21 i) disposée dans un rack solidaire du plateau tournant (20), une seule carte de personnalisation pouvant être reliée à plusieurs dispositifs de personnalisation. Le moyen de communication sans contact (225') à antenne d'émission et de réception, selon une variante de réalisation représentée en figure 4B, peut être moulé dans le plateau fixe (227) relié électriquement à un connecteur (2241') qui assure la connexion avec une nappe de fils (217') reliée à un autre connecteur (216') à la carte électrique de personnalisation. Une carte de personnalisation (21 i) comporte un circuit d'interface d'antenne (211' ou 211) disposé entre le bus (210) de la carte et le connecteur (216 ou 216') relié au moyen de communication (225, 225'). Ce circuit d'interface d'antenne (211' ou 211) peut être du type de celui commercialisé par Philips sous la référence MFCM 200. Le bus (210) est aussi relié à un microprocesseur (212) de la carte de personnalisation qui exécute le programme de personnalisation des puces électroniques, lequel programme est chargé dans une mémoire (213) de la carte électronique (21 i). Une seule carte électronique peut gérer la personnalisation de plusieurs passeports en même temps. La puissance des microprocesseurs actuels permet par exemple d'envisager sans pénaliser la performance, de dialoguer avec quatre passeports simultanément avec une seule carte électronique. L'avenir autorisera certainement d'aller bien au-delà avec un minimum d'une seule carte électronique pour l'ensemble des passeports. Le microprocesseur (212) peut gérer la personnalisation de plusieurs passeports insérés dans des dispositifs de personnalisation (22i) reliés à la carte électronique (21 i) associée au microprocesseur (212). La mémoire (213) peut éventuellement être intégrée au processeur (212) ou comme cela est représenté sur les figures 4A, 4B et 4C, être reliée par le bus (210) à ce dernier. La mémoire comporte également un espace libre pour y stocker les données de personnalisation du passeport à personnaliser. Enfin, le microprocesseur (212) possède également, par l'intermédiaire du bus (210) et du connecteur (214) relié à ce bus (210), une carte sécuritaire dont la fonction est de fournir les informations sécuritaires nécessaires à la personnalisation des applications sécuritaires. Enfin, le bus (210) de chaque carte est relié par une interface (215) de type UART à un ordinateur de fond de panier (61). Durant la phase de personnalisation le passeport est maintenu pressé entre la partie fixe (227) et la tête (224) solidaire de la partie mobile (221) du dispositif de personnalisation. La partie mobile (221) du dispositif de personnalisation (22i) à un passeport est en permanence sollicitée en direction de la partie fixe (227) par des moyens élastiques (222) prenant appui sur une partie fixe du plateau (20). Un levier en L (228) permet par son extrémité (2281) d'agir sur le guide (2210) solidaire de la tête (224) et de la partie mobile (221) pour ménager entre la tête (224) et la partie fixe (227) un espace suffisant pour permettre le passage des passeports (4) transportés par le chemin de transfert et la courroie crantée (3) et assurer ainsi le chargement et le déchargement en passeports (4). En référence à la figure 5, représentant un mode de transfert de passeports en position horizontale, le levier (228) est actionné pour soulever la tête (224) par un doigt (229) solidaire du plateau tournant (20) disposé en face de chaque levier (228) associé à chaque dispositif de personnalisation (22i). Lorsqu'un dispositif de personnalisation (22i) vient se placer au poste de chargement et de déchargement des passeports (4), en s'intercalant dans le chemin de transfert (3) entre les guides d'arrivée (32a) et de départ (32b), le doigt d'actionnement du levier (228) se trouve en face d'un vérin (ou autre actionneur) (230) dont le piston (231) vient soulever les têtes. Ceci permet de libérer le passeport (4) puis, par un déplacement de la courroie (3) dans le sens de la flèche (A) figure 3, de déplacer le passeport (4) personnalisé et en même temps d'amener le passeport suivant dans le dispositif de personnalisation (22i) qui vient de terminer la personnalisation. Dans le mode de transfert des passeports en position verticale (non représenté), le levier peut être disposé de telle sorte qu'il permette d'écarter la tête (224) du plateau fixe (227). Dans tous les cas, le passeport personnalisé ou sortant du plateau est transporté par la courroie (3), vers le poste d'éjection (12). Ce poste d'éjection (12) permet de rediriger les passeports (4) dont la personnalisation de la puce électronique (41) a été incomplète ou défectueuse vers une trappe. Les puces électroniques (41) défectueuses des passeports (4) ainsi rediriger sont remplacées par de nouvelles puces (41) ne contenant aucune donnée de personnalisation, et les passeports (4) sont, ensuite, à nouveau placés dans le dispositif dépileur (11). Si la personnalisation a réussi, le passeport (4) est transféré vers un dispositif empileur (13) classique où il est empilé dans un magasin double, fonctionnant selon le même principe que le dispositif dépileur (11) mais en sens inverse.

Le plateau tournant (20) peut ainsi comporter un grand nombre de dispositifs de personnalisation (22i) associés à une carte électronique de personnalisation (21 i). Chaque carte électronique (21 i) gère la personnalisation de la puce électronique (41) du passeport (4) inséré par la courroie de transfert (3) dans le dispositif de personnalisation (22i) relié à la carte de personnalisation (21 i). Le plateau peut comporter ainsi, par exemple, 32, 24, 16, 12 ou 6 dispositifs de personnalisation (22i) reliés à des cartes électroniques de personnalisation (21 i), chacune des cartes électroniques de personnalisation étant reliée en réseau à un ordinateur (6) dédié à la personnalisation. La liaison entre le système embarqué en rotation (2) et l'installation (6) fixe peut être assurée par un collecteur tournant (62). La connexion se fait par des contacts fixes solidaires de la partie fixe de la machine appuyant sur un ensemble de pistes tournantes solidaires du plateau tournant. De même les alimentations, nécessaires au fonctionnement du matériel embarqué sur le plateau tournant s'effectuent, par des contacts fixes qui sont en appui sur les pistes d'alimentation. Le plateau tournant peut effectuer une rotation de manière continue et à chaque pas de rotation présenter un dispositif de personnalisation en face du chemin de transfert. Selon une variante de réalisation plus économique, la liaison entre le système embarqué en rotation et l'installation fixe peut être assurée par un connecteur flexible tel qu'une nappe conductrice s'enroulant en spirale. Une extrémité de la nappe conductrice est connectée à l'installation fixe, l'autre extrémité est connectée à l'axe tournant du plateau tournant. Dans ce mode de réalisation, le plateau tournant réalise une rotation alternée, dans un sens puis dans l'autre. Dans ce cas les dispositifs de personnalisations peuvent arriver de manière intercalée pour optimiser la personnalisation des passeports. Par exemple, dans un sens, un dispositif de personnalisation sur deux s'arrêtera au poste de chargement et de déchargement du poste de personnalisation et dans l'autre sens se seront les dispositifs complémentaires qui s'arrêteront.

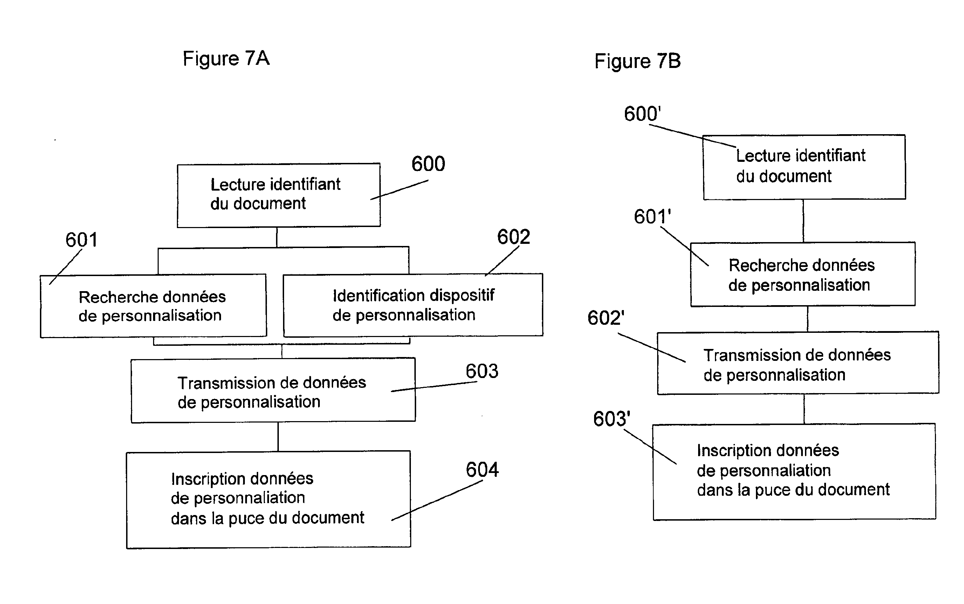

Le système informatique (6) relié au poste de personnalisation, comporte le logiciel de gestion des personnalisations des puces électroniques (41) des passeports (4). Cet ordinateur (6) est également relié au poste de lecture (5) pour récupérer l'identifiant lu sur l'étiquette (40) d'un passeport (4) avant personnalisation ou l'identifiant inscrit sur une des pages intérieures du passeport. La figure 7A représente le procédé de personnalisation selon un mode de réalisation, réalisé par le système informatique (6). Une première étape (600) consiste à lire l'identifiant (41) du document (4) par le dispositif de lecture (5) optique ou magnétique disposé avant le poste de personnalisation et de transférer cette information vers le système informatique. Une seconde étape (601) permet de rechercher les données de personnalisation relatives à l'identifiant lu, dans la base de données du système informatique, le système informatique comprenant un moyen d'extraire les données de la base de données et de les communiquer vers une carte électronique (21 i). Une troisième étape (602) concomitante à la seconde étape (601) consiste à identifier le dispositif de personnalisation (22i) arrivant au poste de chargement/déchargement qui va charger et personnaliser le document dont l'identifiant vient d'être lu. L'identification peut être associée à une adresse correspondant à chaque dispositif de personnalisation (22i). Une quatrième étape (603) consiste à transmettre les données de personnalisation de la base de données vers la mémoire de la carte électronique reliée au dispositif de personnalisation identifié. Une cinquième étape (604) consiste, une fois le document chargé dans le dispositif de personnalisation (22i), à inscrire les données de personnalisation mémorisées dans la mémoire de la carte électronique vers la mémoire de la puce électronique (41) du document (4) chargé via les moyens de communication (2243, 42) sans contact respectivement du dispositif de personnalisation (22i) et du document (4). Le processeur de la carte électronique va commander l'écriture des données mémorisées dans la mémoire de la carte vers la mémoire de la puce électronique. Une carte peut être reliée à plusieurs dispositifs de personnalisation, le processeur de la carte dans ce cas va gérer la distribution des données vers le bon dispositif de personnalisation dans lequel va être inséré le passeport à personnaliser.

Enfin, un autre P.C. (61) ou le système informatique lui-même va gérer la commande séquentielle de la machine et reçoit les informations des différents dispositifs de positionnement, tel que le codeur angulaire de position du plateau (20), les différents dispositifs de détection permettant de s'assurer de la mise en place d'un passeport transporté par la courroie (3) en vis à vis du poste adéquat et de détecter la position de la connexion (3). Dans le mode de réalisation du moyen de préhension (31) comportant des pinces de préhension, l'ouverture et la fermeture peuvent être commandées de manière automatique par le PC (61). L'axe de rotation du plateau (20) est entraîné par un moteur synchrone par l'intermédiaire d'une transmission par courroie crantée. Les positions des dispositifs de personnalisation (22i) peuvent être suivies par un système de codage non représenté.

En fonctionnement, le dispositif de transfert à courroie (3) extrait un passeport (4) d'un dispositif de personnalisation (22i) arrivé au poste de chargement/déchargement dont la personnalisation du document est terminée et introduit un nouveau passeport (4) dans le dispositif de personnalisation (22i) dont la position vient de se libérer. Après l'introduction du passeport, une rotation continue d'une position ou une rotation alternée du plateau tournant (20) est effectuée. La personnalisation dure un temps qui peut correspondre au maximum à la durée de rotation d'un tour complet. Après un nombre de fraction de tour du plateau (20) suffisant, le passeport (4) personnalisé vient se replacer dans le chemin de transfert entre deux moyens de préhension libres (31). Puis le passeport (4) est extrait du dispositif de personnalisation (22i) par déplacement de la courroie transfert (3) après écartement de la tête (25) et du presseur (221). Lorsque le plateau (2) comporte un ensemble de 32 dispositifs de personnalisation et avec une vitesse de déplacement d'un poste à un autre de l'ordre d'un passeport par seconde, la machine permet d'atteindre une capacité de personnalisation de 3600 passeports par heure avec un temps de personnalisation maximum de l'ordre de 32 secondes.

Dans un second mode de réalisation de la machine de personnalisation représenté en figure 4C, chaque dispositif de personnalisation peut comprendre un élément à lecture optique ou magnétique (2243). Cet élément peut être par exemple situé sur la tête (224) disposée en face de l'étiquette (40) du passeport (4) et relié électriquement à un connecteur (2242) qui assure la connexion avec une nappe de fils (220) relié par un connecteur (218) à une carte électronique (21 i) associée au dispositif de personnalisation (22i). La carte électronique (21 i) comporte alors une interface de lecture (219) située entre le connecteur (218) et le bus (210). Dans ce mode de réalisation, le plateau fixe (227) comprend un moyen de communication (225') sans contact, telle qu'une antenne d'émission réception moulée dans le plateau (227), le moyen de communication (225') étant relié électriquement à un connecteur (2241') qui assure la connexion avec une nappe de fils (217') reliée par un deuxième connecteur (216') de la même carte électronique (21 i). Une interface du moyen de communication (211') est disposée entre le connecteur (216') associé au moyen de communication et le bus (210) de la carte électronique (21 i). La figure 7B représente le procédé de personnalisation selon ce mode de réalisation, réalisé par le système informatique (6). Une première étape (600') consiste à lire l'identifiant (41) du document (4) par le dispositif de lecture (2243) optique ou magnétique ou électromagnétique disposé dans chaque dispositif de personnalisation (22i) et de transférer cette information vers le système informatique (6) via une interface (215) et un connecteur (62). Une seconde étape (601') permet de rechercher les données de personnalisation relatives à l'identifiant lu, dans la base de données du système informatique, le système informatique comprenant un moyen d'extraire les données de la base de données et de les communiquer vers une carte électronique (21 i). Une troisième étape (602') consiste à transmettre les données de personnalisation de la base de données vers la mémoire de la carte électronique reliée au dispositif de personnalisation comprenant le document à personnaliser. Une quatrième étape (603') consiste, à inscrire les données de personnalisation mémorisées dans la mémoire de la carte électronique vers la mémoire de la puce électronique (41) du document (4) chargé via les moyens de communication (225', 42) sans contact respectivement du dispositif de personnalisation (22i) et du document (4). Le processeur de la carte électronique va commander l'écriture des données mémorisées dans la mémoire de la carte vers la mémoire de la puce électronique. Le programme de personnalisation de la carte électronique (21 i) dispose dans son algorithme des instructions nécessaires pour donner accès à travers le bus (210) au connecteur (219) qui correspond à l'élément de lecture, pour réaliser la lecture et pour rediriger le numéro d'identification lu sur l'identifiant (40) d'un passeport (4) dans la mémoire (213) de la carte de personnalisation (21 i). Puis des instructions pour récupérer dans la base de données de l'ordinateur (421), gérant la personnalisation, les données associées au numéro d'identification lu et les mémoriser dans la mémoire (213) de la carte électronique (21 i). Enfin, des instructions donnent accès à travers le bus (210) au connecteur (216') qui correspond à l'antenne (225') du plateau fixe (227) et écrient les données mémorisées dans la puce électronique (41) du passeport (4). Ainsi, le programme de personnalisation comprendra des moyens d'adresser sélectivement et de commander sélectivement l'adressage des informations sur l'un ou l'autre des connecteurs (216', 218).

Dans un troisième mode de réalisation, la machine de personnalisation comprend un dispositif de lecture (5') d'un identifiant pré-mémorisé dans la mémoire de la puce électronique (41) intégrée dans le passeport (4). L'identifiant est appelé également donnée de pré-personnalisation tel que le numéro de série de la puce électronique. Le poste de lecture (5') de l'identifiant de la puce (41) remplace le poste de lecture (5) optique ou magnétique du numéro d'identification de l'étiquette (40) du passeport (4). Le poste de lecture (5') de la puce (41) comprend un système de communication sans contact telle qu'une antenne émettrice réceptrice permettant de communiquer par onde hertzienne avec l'antenne (42) de la puce électronique (41) du passeport (4). Ce poste de lecture (5') est relié au système informatique (6) gérant la personnalisation des puces électroniques des passeports (4). Le procédé de personnalisation de cette variante de réalisation est proche du procédé de personnalisation de la machine de personnalisation comportant un poste de lecture optique ou magnétique séparé du poste de personnalisation représenté en figure 7A. Une première étape (600) consiste à lire l'identifiant pré-mémorisé de la puce électronique (41) du document (4) par le dispositif de lecture (5) disposé avant le poste de personnalisation et de transférer cette information vers le système informatique. Une seconde étape (601) permet de rechercher les données de personnalisation relatives à l'identifiant pré-mémorisé lu, dans la base de données du système informatique, le système informatique comprenant un moyen d'extraire les données de la base de données et de les communiquer vers une carte électronique (21 i). Une troisième étape (602) concomitante à la seconde étape (601) consiste à identifier le dispositif de personnalisation (22i) arrivant au poste de chargement/déchargement qui va charger et personnaliser le document dont l'identifiant pré-mémorisé vient d'être lu. L'identification peut être associée à une adresse correspondant à chaque dispositif de personnalisation (22i). Une quatrième étape (603) consiste à transmettre les données de personnalisation de la base de données vers la mémoire de la carte électronique reliée au dispositif de personnalisation identifié. Une cinquième étape (604) consiste, une fois le document chargé dans le dispositif de personnalisation (22i), à inscrire les données de personnalisation mémorisées dans la mémoire de la carte électronique vers la mémoire de la puce électronique (41) du document (4) chargé via les moyens de communication (225 ou 225', 42) sans contact respectivement du dispositif de personnalisation (22i) et du document (4). Le processeur de la carte électronique va commander l'écriture des données mémorisées dans la mémoire de la carte vers la mémoire de la puce électronique. Une vérification par la carte électronique du bon identifiant de la puce électronique à personnaliser peut être réalisée avant écriture, afin d'éviter toutes erreurs d'inscription.

Un quatrième mode de réalisation peut être envisagé consistant à insérer directement la lecture de l'identifiant pré-mémorisé de la puce électronique directement par le moyen de communication sans contact (225 ou 225') relié à une carte de personnalisation (21 i). Ce mode de réalisation évite ainsi toute erreur d'écriture des données dans la mémoire de la puce électronique intégrée dans le passeport et permet également d'augmenter la rapidité de personnalisation des puces des passeports supprimant ainsi le passage par un poste de lecture avant personnalisation.

Toute modification à la portée de l'homme de métier fait également partie de l'esprit de l'invention. Le fait que chaque carte de personnalisation (21 i) soit embarquée sur le plateau tournant (20), permet de personnaliser beaucoup plus rapidement les passeports (4) en raccourcissant les délais de transmission entre les équipements de personnalisation et les passeports (4) à personnaliser. De même, le fait de transmettre les paramètres de personnalisation et d'avoir sur chaque carte (21 i) un programme de personnalisation embarqué, améliore également le rendement de la machine. Enfin, l'utilisation sur chaque carte de personnalisation (21 i) d'un connecteur spécifique (214), pour permettre la mise en place d'une carte sécuritaire (4s) délivrant les informations sécuritaires nécessaires aux opérations de personnalisation sécuritaires, améliore la fiabilité et la sécurité des opérations de personnalisation.

Une variante de réalisation, représentée en figure 2B du poste de personnalisation, consiste en ce que le poste de personnalisation est un ascenseur comportant une pluralité de dispositifs de personnalisation (22a-22n). Dans un mode de transfert des passeports en position horizontale, l'axe de translation de l'ascenseur est vertical et perpendiculaire au plateau de la table (1) de façon à ce que les dispositifs de personnalisation (22a-22n) se présentent perpendiculairement au chemin de transfert orienté selon la flèche (A) et que chaque dispositif de personnalisation (22a - 22n) puissent venir s'intercaler dans le cheminement des passeports entre le rail de guidage (32a) de l'arrivée des passeports et le rail (32b) de guidage en sortie du système de personnalisation. Dans un mode de transfert des passeports en position verticale, l'axe de translation de l'ascenseur est horizontal et parallèle au plateau de la table (1) de façon à ce que les dispositifs de personnalisation (22a-22n) se présentent parallèlement au chemin de transfert orienté selon la flèche (A) et que chaque dispositif de personnalisation (22a - 22n) puissent venir s'intercaler dans le cheminement des passeports entre le rail de guidage (32a) de l'arrivée des passeports et le rail (32b) de guidage en sortie du système de personnalisation. Dans ces deux cas de réalisations, les dispositifs de personnalisation (22a - 22n) sont identiques aux dispositifs de personnalisation du mode de réalisation comprenant un plateau tournant. Les dispositifs de personnalisation (22a - 22n) sont placés linéairement et de manière juxtaposée dans l'ascenseur. L'ascenseur comprend également un poste de chargement/déchargement des documents à personnaliser ou déjà personnalisés. En fonctionnement, le dispositif de transfert à courroie (3) extrait un passeport (4) d'un dispositif de personnalisation (22i') arrivé au poste de chargement/déchargement dont la personnalisation du document est terminée et introduit un nouveau passeport (4) dans le dispositif de personnalisation (22i') dont la position vient de se libérer. Après l'introduction du passeport, l'ascenseur se déplace soit verticalement soit horizontalement d'un pas pour ensuite décharger et charger un nouveau passeport. Arrivé à la fin de sa translation, l'ascenseur va effectuer une translation inverse complète pour positionner son dispositif de personnalisation face au chemin de transfert. La personnalisation dure un temps minimum qui peut correspondre à toute la durée de translation dans un sens complète permettant de revenir au dispositif de personnalisation de départ. Dans une variante de réalisation le cycle de déplacement de l'ascenseur peut être séquentiel. Par exemple, l'ascenseur peut se déplacer de deux emplacements à chaque pas dans un sens de translation et revenir dans le sens inverse sur les emplacements complémentaires. Dans tous les cas, après un nombre de fractions de l'ascenseur (20) suffisant, le passeport (4) personnalisé vient se replacer dans le chemin de transfert entre deux moyens de préhension libres (31). Puis le passeport (4) est extrait du dispositif de personnalisation (22i) par déplacement de la courroie de transfert (3) après relevage de la tête (25) et du presseur (221). Les différentes variantes de procédés de personnalisation sont identiques aux variantes de procédés de personnalisation du poste de personnalisation comportant un plateau tournant (2).

Une autre variante de réalisation (non représentée) consiste en ce que le poste de personnalisation peut comporter un plateau tournant dont l'axe de rotation est d'une part horizontal et parallèle au plateau de la table et d'autre part incliné par rapport au chemin de transfert. Ce plateau tournant a une section tronconique dont un côté du tronc de cône, du fait de l'inclinaison de l'axe de rotation du plateau, est parallèle au chemin de transfert. La face latérale inclinée du tronc de cône supporte sur son pourtour une pluralité de dispositifs de personnalisation de façon que chaque dispositif de personnalisation puisse venir s'intercaler dans le cheminement des cartes entre le rail de guidage de l'arrivée des cartes et le rail de guidage en sortie du système de personnalisation.

Selon un autre mode de réalisation (non représenté) de la machine de personnalisation, l'insertion des passeports sur le moyen de transport peut être réalisée manuellement.

Selon un autre mode de réalisation (non représenté) de la machine de personnalisation, le dispositif de lecture de l'identifiant et le dispositif de personnalisation peuvent être intégrés dans une machine de fabrication et/ou pré-personnalisation de passeports. Une machine de pré-personnalisation de passeports réalise l'insertion de données texte, photo et/ou perforations correspondant au destinataire du passeport. Le système informatique relié au dispositif de lecture et au dispositif de personnalisation peut être également relié au poste de fabrication et/ou pré-personnalisation (photo, perforation, texte) et d'impressions des passeports gérant ainsi le suivi des données d'impression à inscrire sur le passeport et des données de personnalisation à mémoriser dans la puce électronique insérée dans le passeport.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Machine de personnalisation à haute cadence comportant, un poste de personnalisation (2, 2') de documents personnalisables (4) -et un système informatique (6, 6'),
chaque document personnalisable (4), comprenant plusieurs feuillets, un identifiant représentant une information (40) d'identification, un moyen de communication (42) sans contact de type antenne émettrice/réceptrice reliée à une puce électronique (41), la puce (41) du document personnalisable (4) étant programmable par un moyen de communication sans contact, la machine de personnalisation comprenant :
- un poste de lecture (5, 5') de l'identifiant comprenant un dispositif tournant les feuillets du document (4) pour lire l'identifiant,
- un dispositif de transfert continu assurant le transfert sécurisé du document maintenu ouvert par des moyens de maintien, du poste de lecture vers le poste de personnalisation,
**caractérisé en ce que** le poste de personnalisation comprend une pluralité de dispositifs de personnalisation équipés chacun d'une antenne de communication sans contact
commandée sélectivement par une carte électronique qui reçoit des données de personnalisation, associées à l'identifiant lu dans une base de données (60, 60') du système informatique (6, 6'), pour inscrire au moins certaines de ces données dans la puce électronique (41) du document.

2. Machine de personnalisation selon la revendication 1, **caractérisée en ce que** le poste de lecture comporte des moyens de transmission de l'information d'identification représentée par l'identifiant, vers le système informatique (6, 6') qui comprend des moyens d'extraire, de la base de données (60, 60'), les données de personnalisation associées à l'identifiant et de communiquer les données de personnalisation au poste de personnalisation.

3. Machine de personnalisation à haute cadence selon la revendication 2, **caractérisée en ce que** le poste de personnalisation (2, 2') comprend la pluralité de dispositifs de personnalisation (22a-22n, 22a'-22n') dans lesquels sont chargés les documents de personnalisation, et la ou des cartes électroniques reliées à un ou plusieurs des dispositifs de personnalisation, chaque dispositif de personnalisation (22i, 22i') comprenant un plateau fixe (227) sur lequel est maintenu le document (4) et un moyen de communication sans contact (225, 225') telle que l'antenne émettrice/réceptrice pour communiquer avec le moyen de communication sans contact du document (4), l'antenne étant associée à la carte électronique (21 i) pour transmettre les données de personnalisation au document (4) placé sur le plateau fixe, la carte électronique étant en communication avec le système informatique (6, 6') gérant les données de personnalisation par des moyens de séquencement et des moyens de suivi, pour associer le dispositif de personnalisation avec le document à personnaliser chargé et adresser les données de personnalisation à la carte électronique (21 i) associée au dispositif de personnalisation (22i, 22i') qui chargera le document.

4. Machine de personnalisation à haute cadence selon la revendication 3, **caractérisée en ce que** le maintien du document (4) dans le dispositif de personnalisation (22i, 22i') est assuré par pincement du document entre le plateau fixe (227) et une tête (224).

5. Machine de personnalisation à haute cadence selon la revendication 4, **caractérisée en ce que** le moyen de communication sans contact (225) du dispositif de personnalisation est disposé dans la tête (224).

6. Machine de personnalisation à haute cadence selon la revendication 4, **caractérisée en ce que** le moyen de communication sans contact (225') du dispositif de personnalisation est disposé dans le plateau fixe (227).

7. Machine de personnalisation à haute cadence selon une des revendications 3 à 6, **caractérisée en ce que** chaque carte électronique (21 i) comporte un circuit d'interface (211, 211') avec un ou des moyens de communication sans contact (225, 225'), reliée par un bus (210) à un microprocesseur (212) qui exécute un programme de personnalisation.

8. Machine de personnalisation à haute cadence selon la revendication 7, **caractérisée en ce que** la carte électronique (21 i) associée au dispositif de personnalisation (22i, 22i') dans lequel le document (4) sera inséré comprend un moyen de transmettre les données de personnalisation reçues pour être inscrites dans une mémoire de la puce électronique (41).

9. Machine de personnalisation à haute cadence selon la revendication 7 ou 8, **caractérisée en ce que** le bus (210) de chaque carte électronique (21 i) est relié en réseau par une interface (215) reliée par un connecteur (62) au système informatique (6, 6'),

10. Machine de personnalisation à haute cadence selon une des revendications 2 à 9, **caractérisée en ce que** le poste de lecture (5, 5') est un poste de lecture à reconnaissance optique de caractère permettant de lire un identifiant imprimé visible (40) du document (4) et transmettant l'information reconnue optiquement au système informatique (6) qui va utiliser cette information pour rechercher les données de personnalisation dans la base de données (60, 60') du système informatique.

11. Machine de personnalisation à haute cadence selon une des revendications 2 à 9, **caractérisée en ce que** le poste de lecture (5, 5') est un poste de lecture magnétique ou électromagnétique permettant de lire l'identifiant magnétique du document (4) et transmettant l'information lue magnétiquement ou électromagnétiquement au système informatique (6) qui va utiliser cet information pour rechercher les données de personnalisation dans la base de données (60, 60') du système informatique.

12. Machine de personnalisation à haute cadence selon une des revendications 2 à 9, **caractérisée en ce que** le poste de lecture (5, 5') comprend un moyen de communication sans contact permettant de lire un identifiant pré-mémorisé dans la mémoire de la puce électronique (41) du document (4) et transmet le numéro lu en mémoire au système informatique (6, 6') qui va utiliser ce numéro pour rechercher les données de personnalisation dans la base de données (60, 60') du système informatique.

13. Machine de personnalisation à haute cadence selon une des revendications 7 à 9, **caractérisée en ce que** chaque carte électronique (21 i) comprend un connecteur (2241, 2241') relié à un moyen de communication sans contact des dispositifs de personnalisation et **en ce que** le poste de lecture de l'identifiant pré-mémorisé dans la mémoire de la puce électronique (41) d'un document (4) est réalisé par le moyen de communication (225, 225') sans contact associé au microprocesseur (212) de la carte électronique (21 i) associé au document personnalisable (4).

14. Machine de personnalisation à haute cadence selon la revendication 10 ou 11, **caractérisée en ce que** le poste de lecture optique ou magnétique (2243) est disposé dans la tête (224) de chaque dispositif de personnalisation (22i) de manière à être situé en vis-à-vis d'un identifiant visible (40) du document (4) chargé dans un dispositif de personnalisation (22i, 22i').

15. Machine de personnalisation à haute cadence selon une des revendications 1 à 14, **caractérisée en ce que** le dispositif de transfert (3, 31) de document personnalisable comporte une ligne de transfert sur laquelle sont montés des moyens de préhension (31) de documents (4), les moyens de préhension (31) étant montés à intervalle régulier, par paire, dont la distance maximale entre deux moyens de préhension consécutifs permet de maintenir un document (4).

16. Machine de personnalisation à haute cadence selon une des revendications 3 à 14, **caractérisée en ce que** le poste de personnalisation (2) comprend un plateau tournant (20) comportant la pluralité de dispositif de personnalisation (22a-22n) présenté en position de chargement, transversalement et séquentiellement à une ligne de transfert du dispositif de transfert et **en ce que** le plateau tournant (20) comprend un dispositif de chargement/déchargement permettant de décharger un document (4) personnalisé d'un dispositif de personnalisation (22i) situé sur le dispositif de chargement/déchargement vers le dispositif de transfert (3; 31) de documents (4) et de charger un nouveau document (4) du dispositif de transfert (3, 31) vers le dispositif de personnalisation (22i), le temps de personnalisation maximal correspondant à un tour de rotation du plateau tournant (20).

17. Machine de personnalisation à haute cadence selon une des revendications 3 à 14, **caractérisée en ce que** le poste de personnalisation (2) comprend un ascenseur (20') comportant la pluralité de dispositifs de personnalisation (22a'-22n') disposés linéairement et de manière juxtaposée dans l'ascenseur (20') et **en ce que** l'ascenseur (20') comprend un dispositif de chargement/déchargement permettant de décharger un document (4) personnalisé d'un dispositif de personnalisation (22i') situé sur le dispositif de chargement/déchargement vers le dispositif de transfert (3'; 31') de documents (4) et de charger un nouveau document (4) du dispositif de transfert (3', 31') vers le dispositif de personnalisation (22i'), le temps de personnalisation maximal correspondant à un cycle de translation complète de l'ascenseur (20').

18. Machine de personnalisation à haute cadence selon la revendication 17, **caractérisé en ce que** l'axe de l'ascenseur (2') est disposé perpendiculairement et face à une ligne de transfert du dispositif de transfert comprenant un chemin de transfert (3), le déplacement de l'ascenseur étant effectué par une translation verticale.

19. Machine de personnalisation à haute cadence selon la revendication 17, **caractérisé en ce que** l'axe de l'ascenseur (2) est disposé parallèlement et en vis à vis de la ligne de transfert du dispositif de transfert comprenant un chemin de transfert (3), le déplacement de l'ascenseur étant effectué par une translation horizontale.

20. Machine de personnalisation à haute cadence selon une des revendications 1 à 19, **caractérisée en ce qu'**elle comporte un dispositif dépileur (11) de document en entrée de la machine, un dispositif empileur (13) en sortie de la machine.

21. Machine de personnalisation à haute cadence selon une des revendications 1 à 20, **caractérisée en ce que** le système informatique de la machine de personnalisation gère une machine de fabrication et/ou pré-personnalisation de passeport qui incorporent la machine de personnalisation..

22. Procédé de personnalisation réalisé par une machine de personnalisation comportant au moins un dispositif de personnalisation (2, 2') d'un document personnalisable (4) et un système informatique (6, 6') comprenant une base de données (60, 60'), chaque document personnalisable (4) comportant plusieurs feuillets, un identifiant (40), une puce électronique (41) et un moyen de communication sans contact (42), le procédé de personnalisation, le procédé comprenant les étapes suivantes:
une étape de chargement du document personnalisable dans la machine,
une étape (600) de lecture de l'identifiant (40) du document par un dispositif de lecture (5, 5') grâce à une commande de moyens tournant les feuillets du document pour lire l'identifiant (40),
le procédé étant **caractérisé en ce qu'**il comprend les étapes suivantes :
une étape (601) de recherche de données de personnalisation dans une base de données (60) du système informatique (6, 6') en fonction de l'identifiant (40) lu sur le document (4), pendant le transfert sécurisé du document du dispositif de lecture vers un dispositif de personnalisation, parmi une pluralité de dispositifs de personnalisation équipés chacun d'une antenne de communication sans contact, commandée sélectivement par une carte électronique,
une étape (603-604) de transmission des données de personnalisation à la carte électronique et d'inscription, par l'antenne du dispositif de personnalisation, des données de personnalisation dans une mémoire de la puce électronique (41) du document (4), avec inscription éventuelle de l'identifiant dans la mémoire de la puce.

## Claims

1. High speed customising machine comprising a customising station (2, 2') of customisable documents (4), and a computer system (6, 6 '),
each customisable document (4), comprising several sheets, an identifier representing an identification information (40), a means of contactless communication (42) of the antenna transmitter/receiver type connected to a memory chip (41), the chip (41) of the customisable document (4) being programmable by a means of contactless communication, the customising machine comprising :
- a reading station (5, 5 ') of the identifier comprising a device turning the sheets of the document (4) to read the identifier,
- a continuous transfer device ensuring secure transfer of the document kept open by retention means, from the reading station towards the customising station,
**characterised in that** the customising station comprises a plurality of customising devices, each equipped with a contactless communication antenna selectively controlled by an electronic card, which receives customising data, associated with the identifier, read from a database (60, 60') of the computer system (6, 6') for entering at least some of these data in the memory chip (41) of the document.

2. Customising machine according to Claim 1, **characterised in that** the reading station comprises means for transmitting identification information represented by the identifier, towards the computer system (6, 6') which comprises means for extracting, from the database (60, 60'), the customising data associated with the identifier and communicating customised data to the customising station.

3. High speed customising machine according to Claim 2, **characterised in that** the customising station (2, 2') comprises the plurality of customising devices (22a - 22n, 22a' - 22n') in which are loaded the customising documents, and the electronic card or cards connected to one or more of the customising devices, each customising device (22i, 22i') comprising a fixed plate (227) on which the document (4) is held and a means of contactless communication (225, 225') such as the transmitting/receiver antenna for communicating with the means of contactless communication of the document (4), the antenna being associated with the electronic card (21 i) for transmitting the customising data to the document (4) located on the fixed plate, the electronic card being in communication with the computer system (6, 6') managing the customising data by means of sequencing and monitoring methods, to associate the customising device with the loaded document to be customised and send the customising data to the electronic card (21 i) associated with the customising device (22i, 22i'), which will load the document.

4. High speed customising machine according to Claim 3 **characterised in that** the retention of the document (4) in the customising device (22i, 22i') is achieved by pinching of the document between the fixed plate (227) and a head (224).

5. High speed customising machine according to Claim 4, **characterised in that** the means of contactless communication (225) of the customising device is arranged in the head (224).

6. High speed customising machine according to Claim 4 **characterised in that** the means of contactless communication (225') of the customising device is arranged in the fixed plate (227).

7. High speed customising machine according to one of Claim 3 to 6, **characterised in that** each electronic card (21 i) comprises an interface circuit (211, 211') with one or more means of contactless communication (225, 225'), connected by a bus (210) to a microprocessor (212) that executes a customising programme.

8. High speed customising machine according to Claim 7, **characterised in that** the electronic card (21 i) associated with the customising device (22i, 22i') in which the document (4) will be inserted, comprises a means of transmitting the received customising data to be entered in a memory of the memory chip (41).

9. High speed customising machine according to Claim 7 or 8, **characterised in that** the bus (210) of each electronic card (21 i) is connected in a network by an interface (215) connected through a connector (62) to the computer system (6, 6').

10. High speed customising machine according to one of Claims 2 to 9, **characterised in that** the reading station (5, 5') is a reading station of optical character recognition for reading a visible printed identifier (40) of the document (4) and transmitting the information recognised optically to the computer system (6), which will use this information to search the customising data in the database (60, 60') of the computer system.

11. High speed customising machine according to one of Claims 2 to 9, **characterised in that** the reading station (5, 5') is a magnetic or electromagnetic reading station allowing reading the magnetic identifier of the document (4) and transmitting the information read magnetically or electromagnetically to the computer system (6), which will use this information to search the customising data in the database (60, 60') of the computer system.

12. High speed customising machine according to one of Claims 2 to 9, **characterised in that** the reading station (5, 5') comprises a means of contactless communication allowing reading a pre-stored identifier in the memory of the memory chip (41) of the document (4) and transmits the read number into the memory in the computer system (6, 6'), which will use this number to search the customising data in the database (60, 60') of the computer system.

13. High speed customising machine according to one of Claims 7 to 9, **characterised in that** each electronic card (21 i) comprises a connector (2241, 2241') connected to a means of contactless communication of the customising devices and **in that** the reading station of the identifier pre-stored in the memory of the memory chip (41) of a document (4) is achieved by means of contactless communication (225, 225') associated with the microprocessor (212) of the electronic card (21 i) associated to the customisable document (4).

14. High speed customising machine according to Claim 10 or 11, **characterised in that** the optical or magnetic (2243) reading station is located in the head (224) of each customising device (22i) in such a way as to be located vis-à-vis of a visible identifier (40) of the document (4) loaded in a customising device (22i, 22i') .

15. High speed customising machine according to one of Claims 1 to 14, **characterised in that** the transfer device (3, 31) of a customisable document has a transfer line on which are mounted gripping means (31) of the documents (4), the gripping means (31) being mounted at regular intervals, in pairs, the maximum distance of which between two consecutive gripping means allow to maintain a document (4).

16. High speed customising machine according to one of Claims 3 to 14, **characterised in that** the customising station (2) comprises a turntable (20) having a plurality of customising devices (22a - 22n) presented in the loading position, transversally and sequentially to a transfer line of the transfer device, and **in that** the turntable (20) comprises a loading/unloading device allowing to download a customised document (4) of a customising device (22i) located on the loading/unloading device towards the transfer device (3, 31) of the documents (4) and to load a new document (4) of the transfer device (3, 31) towards the customising device (22i), the maximum customising time corresponding to a revolution of the turntable (20).

17. High speed customising machine according to one of Claims 3 to14, **characterised in that** the customising station (2) comprises a scroll box (20') having the plurality of customising devices (22a' - 22n') arranged linearly and in a juxtaposed manner in the scroll box (20), and **in that** the scroll box (20') comprises a loading/unloading device allowing to download a customised document (4) of a customising device (22i'), located on the loading/unloading device, towards the transfer device (3', 31') of the documents (4) and to load a new document (4) of the transfer device (3', 31') towards the customising device (22i'), the maximum customising time corresponding to a complete translation cycle of the scroll box (20').

18. High speed customising machine according to Claim 17, **characterised in that** the axis of the scroll box (2') is arranged in a perpendicular manner and facing a transfer line of the transfer device comprising a transfer path (3), the displacement of the scroll box being achieved by a vertical translation.

19. High speed customising machine according to Claim 17, **characterised in that** the axis of the scroll box (2) is arranged in a parallel manner and vis-à-vis of the transfer line of the transfer device comprising a transfer path (3), the displacement of the scroll box being achieved by a horizontal translation.

20. High speed customising machine according to one of Claims 1 to 19 **characterised in that** it has an unstacking device (11) of the input document of the machine, and a stacking device (13) in the machine output.

21. High speed customising machine according to one of Claims 1 to 20, **characterised in that** the computer system of the customising machine manages a manufacturing and/or passport pre-customising machine that incorporate the customising machine.

22. Method of customising achieved by a customising machine comprising at least one customising device (2, 2') of a customisable document (4) and a computer system (6, 6') comprising a database (60, 60'), each customisable document (4) having several sheets, an identifier (40), a memory chip (41), and a means of contactless communication (42), and the method of customizing, the method comprising the following steps:
a step of loading the customisable document in the machine,
a step (600) of reading the identifier (40) of the document by a reading device (5, 5') by virtue of controlling means turning the sheets of the document to read the identifier (40), the method being **characterised in that** it comprises the following steps:
a searching step (601) of customising data in a database (60) of the computer system (6, 6') on the basis of the identifier (40) read on the document (4) during the secure transfer of the document from the reading device towards a customising device, among a plurality of customising devices, each equipped with a contactless communication antenna, selectively controlled by an electronic card,
a transmission step (603 - 604) of customising data to the electronic and registration card, by the customising device antenna of the customising data in a memory of the memory chip (41) of the document (4), with possible registration of the identifier in the memory of the chip.

## Patentansprüche

1. Hochgeschwindigkeits-Personalisierungsmaschine, aufweisend eine Personalisierungsstelle (2, 2') für personalisierbare Dokumente (4) und ein Computersystem (6, 6'),
wobei jedes personalisierbare Dokument (4) mehrere Blätter, einen Identifikator, welcher eine Identifikationsinformation (40) repräsentiert, ein kontaktloses Kommunikationsmittel (42) vom Typ Sender-/Empfängerantenne, die an einen Chip (41) angeschlossen ist, umfasst, wobei der Chip (41) des personalisierbaren Dokuments (4) durch ein kontaktloses Kommunikationsmittel programmierbar ist, wobei die Personalisierungsmaschine Folgendes umfasst:
- eine Stelle zum Auslesen (5, 5') des Identifikators, umfassend eine die Blätter des Dokuments (4) wendende Vorrichtung, um den Identifikator auszulesen,
- eine Vorrichtung zum kontinuierlichen Transfer des durch Haltemittel offengehaltenen Dokuments von der Auslesestelle zur Personalisierungsstelle, wobei die Vorrichtung einen gesicherten Transfer gewährleistet,
**dadurch gekennzeichnet,**
**dass** die Personalisierungsstelle eine Vielzahl von Personalisierungsvorrichtungen umfasst, von denen jede mit einer kontaktlosen Kommunikationsantenne ausgestattet ist, welche selektiv durch eine elektronische Karte gesteuert wird, die Personalisierungsdaten erhält, welche mit dem aus einer Datenbank (60, 60') des Computersystems (6, 6') ausgelesenen Identifikators verknüpft sind, um zumindest bestimmte dieser Daten auf den Chip (41) des Dokuments zu schreiben.

2. Personalisierungsmaschine gemäß Anspruch 1, **dadurch gekennzeichnet, dass** die Auslesestelle Mittel zur Übertragung von Identifikationsinformationen, welche durch den Identifikator repräsentiert werden, zum Computersystem (6, 6') aufweist, das Mittel zum Abfragen von Personalisierungsdaten aus der Datenbank (60, 60'), die mit dem Identifikator verknüpft sind, und zur Übermittlung der Personalisierungsdaten an die Personalisierungsstelle umfasst.

3. Hochgeschwindigkeits-Personalisierungsmaschine gemäß Anspruch 2, **dadurch gekennzeichnet, dass** die Personalisierungsstelle (2, 2') die Vielzahl der Personalisierungsvorrichtungen (22a-22n, 22a'-22n'), welche mit den Personalisierungsdokumenten beladen werden, und die elektronische(n) Karte(n), die mit einer oder mehrer Personalisierungsvorrichtungen verbunden ist/sind, umfasst, wobei jede Personalisierungsvorrichtung (22i, 22i') ein festes Tablett (227) umfasst, auf welchem das Dokument (4) und ein kontaktloses Kommunikationsmittel (225, 225') wie zum Beispiel die Sender-/Empfängerantenne zur Kommunikation mit dem kontaktlosen Kommunikationsmittel des Dokuments (4) gehalten werden, wobei die Antenne mit der elektronischen Karte (21i) verknüpft ist, um Personalisierungsdaten zum Dokument (4), das auf dem festen Tablett platziert ist, zu übertragen, wobei die elektronische Karte in Kommunikation mit dem Computersystem (6, 6') steht, das Personalisierungsdaten durch Sequenzierungsmittel und durch Nachverfolgungsmittel erzeugt, um die Personalisierungsvorrichtung mit dem geladenen zu personalisierenden Dokument zu verknüpfen und um Personalisierungsdaten an die elektronische Karte (21i) zu adressieren, die mit der Personalisierungsvorrichtung (22i, 22i') verknüpft ist, welche das Dokument laden wird.

4. Hochgeschwindigkeits-Personalisierungsmaschine gemäß Anspruch 3, **dadurch gekennzeichnet, dass** das Halten des Dokumentes (4) in der Personalisierungsvorrichtung (22i, 22i') durch Klemmen des Dokuments zwischen dem festen Tablett (227) und einem Kopfstück (224) gewährleistet wird.

5. Hochgeschwindigkeits-Personalisierungsmaschine gemäß Anspruch 4, **dadurch gekennzeichnet, dass** die kontaktlosen Kommunikationsmittel (225) der Personalisierungsvorrichtung im Kopfstück (224) angeordnet sind.

6. Hochgeschwindigkeits-Personalisierungsmaschine gemäß Anspruch 4, **dadurch gekennzeichnet, dass** die kontaktlosen Kommunikationsmittel (225') der Personalisierungsvorrichtung in dem festen Tablett (227) angeordnet sind.

7. Hochgeschwindigkeits-Personalisierungsmaschine gemäß einem der Ansprüche 3 bis 6, **dadurch gekennzeichnet, dass** jede elektronische Karte (21 i) einen Schnittstellenschaltkreis (211, 211') mit einem oder mehreren kontaktlosen Kommunikationsmitteln (225, 225') aufweist, die durch einen Bus (210) an einen Mikroprozessor (212) angeschlossen sind, der ein Personalisierungsprogramm ausführt.

8. Hochgeschwindigkeits-Personalisierungsmaschine gemäß Anspruch 7, **dadurch gekennzeichnet, dass** die elektronische Karte (21 i), die mit der Personalisierungsvorrichtung (22i, 22i'), in welche das Dokument (4) eingeführt wird, verknüpft ist, ein Mittel zur Übertragung von Personalisierungsdaten umfasst, welche erhalten wurden, um in einen Speicher des Chips (41) geschrieben zu werden.

9. Hochgeschwindigkeits-Personalisierungsmaschine gemäß Anspruch 7 oder 8, **dadurch gekennzeichnet, dass** der Bus (210) jeder elektronischen Karte (21 i) durch eine Schnittstelle (215), die über einen Steckverbinder (62) an das Computersystem (6, 6') angeschlossen ist, an ein Netzwerk angeschlossen ist.

10. Hochgeschwindigkeits-Personalisierungsmaschine gemäß einem der Ansprüche 2 bis 9, **dadurch gekennzeichnet, dass** die Auslesestelle (5, 5') eine Stelle zum Auslesen mittels optischer Zeichenerkennung ist, die das Auslesen eines sichtbaren gedruckten Identifikators (40) des Dokuments (4) gestattet und die die optisch erkannte Information an das Computersystem (6) überträgt, das diese Information zur Suche nach Personalisierungsdaten in der Datenbank (60, 60') des Computersystems benutzt.

11. Hochgeschwindigkeits-Personalisierungsmaschine gemäß einem der Ansprüche 2 bis 9, **dadurch gekennzeichnet, dass** die Auslesestelle (5, 5') eine Stelle zum magnetischen oder elektromagnetischen Auslesen ist, die das Auslesen eines magnetischen Identifikators des Dokuments (4) gestattet und die die magnetisch oder elektromagnetisch ausgelesene Information an das Computersystem (6) überträgt, das diese Information zur Suche nach Personalisierungsdaten in der Datenbank (60, 60') des Computersystems benutzt.

12. Hochgeschwindigkeits-Personalisierungsmaschine gemäß einem der Ansprüche 2 bis 9, **dadurch gekennzeichnet, dass** die Auslesestelle (5, 5') ein kontaktloses Kommunikationsmittel umfasst, das das Auslesen eines vorgespeicherten Identifikators aus dem Speicher des Chips (41) des Dokuments (4) gestattet und die aus dem Speicher ausgelesene Nummer an das Computersystem (6, 6') überträgt, das diese Nummer zur Suche nach Personalisierungsdaten in der Datenbank (60, 60') des Computersystems benutzt.

13. Hochgeschwindigkeits-Personalisierungsmaschine gemäß einem der Ansprüche 7 bis 9, **dadurch gekennzeichnet, dass** jede elektronische Karte (21i) einen Steckverbinder (2241, 2241') umfasst, der an ein kontaktloses Kommunikationsmittel der Personalisierungsvorrichtungen angeschlossen ist und dass die Stelle zum Auslesen des vorgespeicherten Identifikators aus dem Speicher des Chips (41) eines Dokuments (4) durch das kontaktlose Kommunikationsmittel (225, 225') realisiert ist, das mit dem Mikroprozessor (212) der mit dem personalisierbaren Dokument (4) verknüpften elektronischen Karte (21 i) verknüpft ist.

14. Hochgeschwindigkeits-Personalisierungsmaschine gemäß Anspruch 10 oder 11, **dadurch gekennzeichnet, dass** die optische oder magnetische Auslesestelle (2243) im Kopfstück (224) jeder Personalisierungsvorrichtung (22i) derart angeordnet ist, dass sie sich gegenüber einem sichtbaren Identifikator (40) des Dokuments (4), mit dem eine Personalisierungsvorrichtung (22i, 22i') beladen ist, befindet.

15. Hochgeschwindigkeits-Personalisierungsmaschine gemäß einem der Ansprüche 1 bis 14, **dadurch gekennzeichnet, dass** die Transfervorrichtung (3, 31) für das personalisierbare Dokument eine Transferleitung aufweist, auf welcher Mittel zum Greifen (31) von Dokumenten (4) angebracht sind, wobei die Mittel zum Greifen (31) paarweise in einem regelmäßigen Abstand angebracht sind und der maximale Abstand zwischen zwei aufeinanderfolgenden Mitteln zum Greifen das Halten eines Dokuments (4) gestattet.

16. Hochgeschwindigkeits-Personalisierungsmaschine gemäß einem der Ansprüche 3 bis 14, **dadurch gekennzeichnet, dass** die Personalisierungsstelle (2) ein drehbares Tablett (20) umfasst, das die Vielzahl der Personalisierungsvorrichtungen (22a bis 22n) aufweist, welche in Beladungspositionen quer und in Reihe zu einer Transferleitung der Transfervorrichtung dargeboten sind, und dass das drehbare Tablett (20) eine Vorrichtung zum Beladen/Entladen umfasst, die es gestattet, ein personalisiertes Dokument (4) von einer sich über der Vorrichtung zum Beladen/Entladen befindenden Vorrichtung zur Personalisierung (22i) hin zur Transfervorrichtung (3; 31) für Dokumente zu entladen und ein neues Dokument (4) von der Transfervorrichtung (3; 31) hin zur Personalisierungsvorrichtung (22i) zu laden, wobei die Zeit zur Personalisierung maximal einer Umdrehung des drehbaren Tabletts (20) entspricht.

17. Hochgeschwindigkeits-Personalisierungsmaschine gemäß einem der Ansprüche 3 bis 14, **dadurch gekennzeichnet, dass** die Personalisierungsstelle (2) einen Aufzug (20') umfasst, der die Vielzahl der Personalisierungsvorrichtungen (22a' bis 22n') aufweist, die linear und nebeneinander stehend in dem Aufzug (20') angeordnet sind, und dass der Aufzug (20') eine Vorrichtung zur Beladung/Entladung umfasst, die es gestattet, ein personalisiertes Dokument (4) aus einer über der Vorrichtung zum Beladen/Entladen befindlichen Personalisierungsvorrichtung (22i') hin zur Transfervorrichtung (3'; 31') für Dokumente (4) zu entladen und ein neues Dokument (4) von der Transfervorrichtung (3'; 31') hin zur Personalisierungsvorrichtung (22i') zu laden, wobei die Zeit zur Personalisierung maximal einem Zyklus einer kompletten Translation des Lifts (20') entspricht.

18. Hochgeschwindigkeits-Personalisierungsmaschine gemäß Anspruch 17, **dadurch gekennzeichnet, dass** die Achse des Aufzugs (2') rechtwinklig zu und zu einer Transferleitung der einen Transferweg (3) umfassenden Transfervorrichtung hin gewandt angeordnet ist, wobei die Bewegung des Aufzugs durch eine vertikale Translation ausgeführt wird.

19. Hochgeschwindigkeits-Personalisierungsmaschine gemäß Anspruch 17, **dadurch gekennzeichnet, dass** die Achse des Aufzugs (2) parallel zu und gegenüber der Transferleitung der einen Transferweg (3) umfassenden Transfervorrichtung, wobei die Bewegung des Aufzugs durch eine horizontale Translation ausgeführt wird.

20. Hochgeschwindigkeits-Personalisierungsmaschine gemäß einem der Ansprüche 1 bis 19, **dadurch gekennzeichnet, dass** sie eine Entstapelungsvorrichtung (11) für Dokumente am Eingang der Maschine und eine Stapelvorrichtung (13) am Ausgang der Maschine aufweist.

21. Hochgeschwindigkeits-Personalisierungsmaschine gemäß einem der Ansprüche 1 bis 20, **dadurch gekennzeichnet, dass** das Computersystem der Personalisierungsmaschine eine Herstellungs- und/oder Vorpersonalisierungsmaschine für Pässe leitet, die die Personalisierungsmaschine einschließen.

22. Verfahren zur Personalisierung, das durch eine Personalisierungsmaschine umgesetzt wird, die zumindest eine Personalisierungsvorrichtung (2, 2') für ein personalisierbares Dokument (4) und ein eine Datenbank (60, 60') umfassendes Computersystem (6, 6') aufweist, wobei jedes personalisierbare Dokument (4) mehrere Blätter, einen Indentifikator (40), einen Chip (41) und ein kontaktloses Kommunikationsmittel (42) aufweist, wobei das Personalisierungsverfahren die nachfolgenden Schritte umfasst:
- einen Schritt des Beladens des personalisierbaren Dokuments in die Maschine,
- einen Schritt (600) des Auslesens des Identifikators (40) des Dokuments durch eine Auslesevorrichtung (5, 5') infolge eines Befehls von Mitteln, welche die Blätter des Dokuments zum Auslesen des Identifikators (40) wenden,
wobei das Verfahren **dadurch gekennzeichnet ist, dass** es die nachfolgenden Schritte umfasst:
- einen Schritt (601) der Suche von Personalisierungsdaten in einer Datenbank (60) des Computersystems (6, 6') in Abhängigkeit des auf dem Dokument (4) ausgelesenen Identifikators (40) während des gesicherten Transfers des Dokuments von der Auslesevorrichtung zu einer Personalisierungsvorrichtung aus einer Vielzahl von Personalisierungsvorrichtungen, von denen jede mit einer selektiv durch eine elektronische Karte gesteuerten Antenne zur kontaktlosen Kommunikation ausgestattet ist,
- einen Schritt (603-604) der Übertragung von Personalisierungsdaten an die elektronische Karte und Schreiben der Personalisierungsdaten in einen Speicher des Chips (41) des Dokumentes (4) durch die Antenne der Personalisierungsvorrichtung, mit optionalem Schreiben des Identifikators in den Speicher des Chips.
